# EUROPÄISCHE PATENTSCHRIFT

(11) **EP 1 527 425 B1**
(45) Veröffentlichungstag und Bekanntmachung des Hinweises auf die Patenterteilung: **14.06.2006**
(21) Anmeldenummer: 03766277.2
(22) Anmeldetag: 24.07.2003
(51) Int. Cl.: G07F 7/10, G06F 17/30, G06K 19/073

(54) **VERFAHREN ZUM EINRICHTEN EINES DATEISYSTEMS IN EINEM DATENTRÄGER**
METHOD OF INSTALLING A FILE SYSTEM IN A DATA SUPPORT
METHODE D'ETABLISSEMENT D'UN SYSTEME DE FICHIER SUR UN SUPPORT DE DONNEES

(30) Priorität: 26.07.2002 DE 10234158
(43) Veröffentlichungstag der Anmeldung: 04.05.2005
(73) Patentinhaber: Giesecke & Devrient GmbH, 81677 München (DE)
(72) Erfinder: CIESINGER, Daniel, 80639 München (DE); MEISTER, Gisela, 81737 München (DE)
(74) Vertreter: Dendorfer, Claus
(86) Internationale Anmeldenummer: PCT/EP2003/008121
(87) Internationale Veröffentlichungsnummer: WO 2004/013821

(56) Entgegenhaltungen:
- WO-A-00/68902
- US-A1- 2001 049 675
- RANKL, WOLFGANG: "Handbuch der Chipkarten, 3. Auflage" 1999 , CARL HANSER VERLAG , MÜNCHEN WIEN XP002258630 ISBN: 3-446-21115-2 Seite 222 -Seite 249

## Beschreibung

Die Erfindung betrifft allgemein das technische Gebiet, ein Dateisystem in einem tragbaren Datenträger, wie z.B. einer Chipkarte oder einem Chipmodul, einzurichten.

Bevor ein Datenträger einsatzbereit ist, muß in ihm ein Dateisystem eingerichtet werden. Dies geschieht typischerweise im Zuge der Initialisierung des Datenträgers, also beim Einspielen von Daten und/oder Programmen, die für eine größere Anzahl von Datenträgern identisch sind. Mit diesem Einspielen von Daten werden auch die Strukturen und Attribute (Dateibaum, Leserechte usw.) des Dateisystems ganz oder teilweise festgelegt. Das Dateisystem kann auch bei anderen Fertigungsschritten eingerichtet werden, z.B. bei der Personalisierung, also dem Einspielen von Daten, die für den Datenträger bzw. dessen späteren Benutzer individuell sind.

In der Norm ISO 7816 wird beschrieben, wie ein normgemäßes Dateisystem in Chipkarten angelegt werden kann. Insbesondere behandelt ISO 7816-9 den Befehl CREATE FILE, mit dem sich die einzelnen Dateien des Dateisystems und die dazugehörigen Dateiattribute sukzessive anlegen lassen. Die Parameter des Befehls CREATE FILE sind so gestaltet, daß Bitfolgen aus den an die Chipkarte übermittelten Daten unmittelbar, also ohne weitere Umsetzung, in einen Speicher der Chipkarte geschrieben werden.

Das genaue Format der zur Dateisystem-Initialisierung in die Chipkarte übertragenen Daten ist meist proprietär und kann von dem jeweiligen Betriebssystem der Karte abhängen. Dies gilt insbesondere dann, wenn die Karte gegenüber der genannten Norm Änderungen oder Weiterentwicklungen aufweist, aber auch in anderen Fällen, weil die Norm einen gewissen Interpretationsspielraum zuläßt. Überdies kommen zunehmend Chipkarten zum Einsatz, deren Dateisystem nicht gemäß ISO 7816 initialisiert werden kann oder bei denen dies zumindest nicht üblich ist, wie z.B. die Java Card^{™}.

Wegen der starken Maschinenorientierung der üblichen Formate sind zum Erstellen und Bearbeiten der Initialisierungsdaten spezielle Hilfsprogramme erforderlich, die ebenfalls an die jeweils verwendete Chipkarte und deren Betriebssystem angepaßt sein müssen. Ein derartiges Hilfsprogramm, das für das Chipkarten-Betriebssystem STARCOS® der Anmelderin zugeschnitten ist, wird gegenwärtig unter der Bezeichnung STARMAG® vertrieben. Auch hier besteht das Problem, daß einerseits das STARMAG®-Programm nicht oder nur eingeschränkt für Chipkarten mit anderen Betriebssystemen verwendbar ist, und daß andererseits möglicherweise nützliche Funktionen anderer Programme nicht für STARCOS®-Chipkarten zur Verfügung stehen.

Die bislang genannten Probleme bestehen nicht nur im Hinblick auf das Format der in die Chipkarte zu übertragenden Daten, sondern ebenso im Hinblick auf das Datenformat, in dem die benötigten Informationen über das anzulegende Dateisystem einer Initialisierungs- und/oder Personalisierungsvorrichtung für Chipkarten übermittelt werden. Auch hier werden proprietäre Formate eingesetzt, die überdies von den jeweils zu bearbeitenden Chipkarten abhängen und spezielle Hilfsprogramme erfordern.

Aus der internationalen Patentanmeldung WO 00/68902 A1 ist es zwar bekannt, ein Dateisystem auf semantischer Ebene zu erzeugen, um die Definition des Dateisystems unabhängig vom Kartentyp zu erlauben, jedoch muß auch dort für jeden Kartentyp ein entsprechender Compiler zum Interpretieren der Dateisystembeschreibung vorgesehen werden.

Die Erfindung hat die Aufgabe, die genannten Probleme ganz oder zum Teil zu lösen. Insbesondere soll durch die Erfindung eine Technik zum Einrichten eines Dateisystems in einem Datenträger bereitgestellt werden, die die bisherige starke Abhängigkeit zwischen dem verwendeten Dateiformat und Betriebssystem-Interna des Datenträgers verringert. In bevorzugten Ausgestaltungen sollen marktübliche Hilfsprogramme und Werkzeuge universell, also im Zusammenhang mit Dateisystem-Einrichtungsdaten für die unterschiedlichsten Datenträger, einsetzbar sein.

Erfindungsgemäß wird diese Aufgabe gelöst durch ein Verfahren mit den Merkmalen von Anspruch 1 bzw. einen tragbaren Datenträger gemäß Anspruch 8. Die abhängigen Ansprüche definieren bevorzugte Ausgestaltungen der Erfindung.

Die Erfindung geht von der Kombination zweier Grundideen aus. Erstens werden Spezifikationsdaten verwendet, die das im Datenträger einzurichtende Dateisystem zumindest zum Teil auf semantischer Ebene beschreiben. Zweitens werden diese Spezifikationsdaten von einem Prozessorkern des Datenträgers interpretiert. In diesem Zusammenhang soll unter einer Interpretation stets eine gewisse Verarbeitung und Umwandlung der Daten verstanden werden. Ein unverändertes Einschreiben von empfangenen Bitfolgen in einen Speicher des Datenträgers ist im allgemeinen keine Interpretation in diesem Sinne.

Durch die Erfindung wird eine erhebliche Abstraktion von Einzelheiten des Datenträger-Betriebssystems erreicht. Dadurch, daß die Interpretation der Spezifikationsdaten durch den Datenträger selbst vorgenommen wird, brauchen externe Systeme keine Interna des Betriebssystems zu kennen, sondern können vielmehr gleichermaßen im Zusammenhang mit unterschiedlichen Typen von Datenträgern verwendet werden. Es entfällt also die Notwendigkeit, Datenstrukturen in dem für die Ablage benötigten speziellen Format bereitzustellen. Die so erzielte technische Vereinheitlichung bewirkt erhebliche Einsparungen im Hinblick auf Geräte, Software und Ausbildung von Mitarbeitern. Überdies steigt durch die Abkapselung interner Datenstrukturen die Sicherheit des Gesamtsystems gegen ungewollte Fehlkonfiguration oder absichtliche Manipulation.

Die Aufzählungsreihenfolge der Schritte in den Verfahrensansprüchen soll nicht als Einschränkung des Schutzbereichs verstanden werden. Es sind vielmehr Ausgestaltungen der Erfindung vorgesehen, bei denen diese Verfahrensschritte in anderer Reihenfolge oder ganz oder teilweise parallel oder ganz oder teilweise ineinander verzahnt (*interleaved*) ausgeführt werden. Insbesondere werden in bevorzugten Ausgestaltungen die Spezifikationsdaten Stück für Stück oder in einem kontinuierlichen Strom in den Datenträger eingelesen und jeweils abschnittsweise interpretiert, wobei die bei der Interpretation ermittelten Teile des Dateisystems jeweils sofort in den Speicher des Datenträgers eingeschrieben werden.

In bevorzugten Ausgestaltungen der Erfindung beschreiben die Spezifikationsdaten die Dateien des Dateisystems und die zugehörigen Dateiattribute. Die Dateiattribute können Sicherheitseinstellungen, wie z.B. Lese-, Schreib-und Ausführungsrechte, und/oder Protokolleinstellungen, wie z.B. eine Übertragung per *Secure Messaging* oder *Secure Sockets Layer* (SSL), definieren. Ferner können die Spezifikationsdaten Relationen zwischen Dateien des Dateisystems angeben, z.B. die Relation, daß zwei Dateien ein Schlüsselpaar bilden, die Relation, daß eine Datei ein Zertifikat für einen Schlüssel darstellt, oder die Relation Datei/Eigentümer. Durch diese möglichen Inhalte stellen die Spezifikationsdaten in bevorzugten Ausführungsformen ein mächtiges Beschreibungsmittel für das Dateisystem dar.

Die Spezifikationsdaten weisen bevorzugt ein textuelles und/oder portables und/ oder interoperables Datenformat auf. Durch diese Maßnahmen lassen sich Werkzeuge und Hilfsprogramme gleichermaßen für unterschiedliche Datenträger einsetzen. In manchen Ausgestaltungen werden weit verbreitete Standard-Datenformate eingesetzt, wie z.B. XML (*extensible markup language*), oder Formate entsprechend den Codierregeln DER (*distinguished encoding rules*) oder BER (*basic encoding rules*) oder PER (*packed encoding rules*), die für Datenstrukturen vorgesehen sind, welche in ASN.1 (*abstract syntax notation no*. *1*) definiert sind.

Für standardisierte Datenformate wie die oben genannten steht eine Vielzahl von universell verwendbaren Werkzeugen zur Verfügung. Beispielsweise können Spezifikationsdaten im XML-Format mittels üblicher Web-Browser visualisiert werden. Auch sind derartige Formate vielen Entwicklungsingenieuren bereits bekannt, so daß keine aufwendigen Schulungen erforderlich sind. Die Spezifikationsdaten können in einer einzigen Datei zusammengefaßt sein oder in Form von mehreren Dateien vorliegen.

Die Spezifikationsdaten werden der Initialisierungs- oder Personalisierungsvorrichtung vorzugsweise bereits in demjenigen Format vorgelegt, in dem sie dann auch an den Datenträger übertragen werden. Eine solche Ausgestaltung hat den Vorteil, daß die Initialisierungs- oder Personalisierungsvorrichtung ohne oder mit nur geringem Einstellungsaufwand für unterschiedliche Datenträger einsetzbar ist. Insbesondere dann, wenn die Initialisierung oder Personalisierung von externen Dienstleistern vorgenommen wird, werden die Spezifikationsdaten vorzugsweise durch kryptographische Mittel, wie z.B. Verschlüsselung und/oder Signatur, gegen Manipulation und/oder Ausspähung geschützt. Die Entschlüsselung bzw. Prüfung der Signatur kann durch den Datenträger selbst vorgenommen werden, so daß außerhalb des Datenträgers keine Angriffsmöglichkeiten bestehen.

Der tragbare Datenträger, die Initialisierungs- und/ oder Personalisierungsvorrichtung und der computerlesbare Datenträger weisen in bevorzugten Weiterbildungen Merkmale auf, die den oben erwähnten und/oder den in den abhängigen Verfahrensansprüchen genannten Merkmalen entsprechen. Der erfindungsgemäße computerlesbare Datenträger, der die Spezifikationsdaten beinhaltet, braucht nicht notwendigerweise materieller Natur zu sein. Auch ein zur Datenübertragung geeignet moduliertes elektrisches oder elektromagnetisches Signal kann ein computerlesbarer Datenträger in diesem Sinne sein.

Weitere Merkmale, Aufgaben und Vorteile der Erfindung ergeben sich aus der folgenden Beschreibung mehrerer Ausführungsbeispiele und Ausführungsalternativen. Es wird auf die schematischen Zeichnungen verwiesen, in denen zeigen:
Fig. 1 ein Blockdiagramm von Komponenten, die an einem Ausführungsbeispiel des erfindungsgemäßen Verfahrens beteiligt sind, und
Fig. 2 eine beispielhafte Darstellung von Spezifikationsdaten, die als XML-Datei vorliegen.

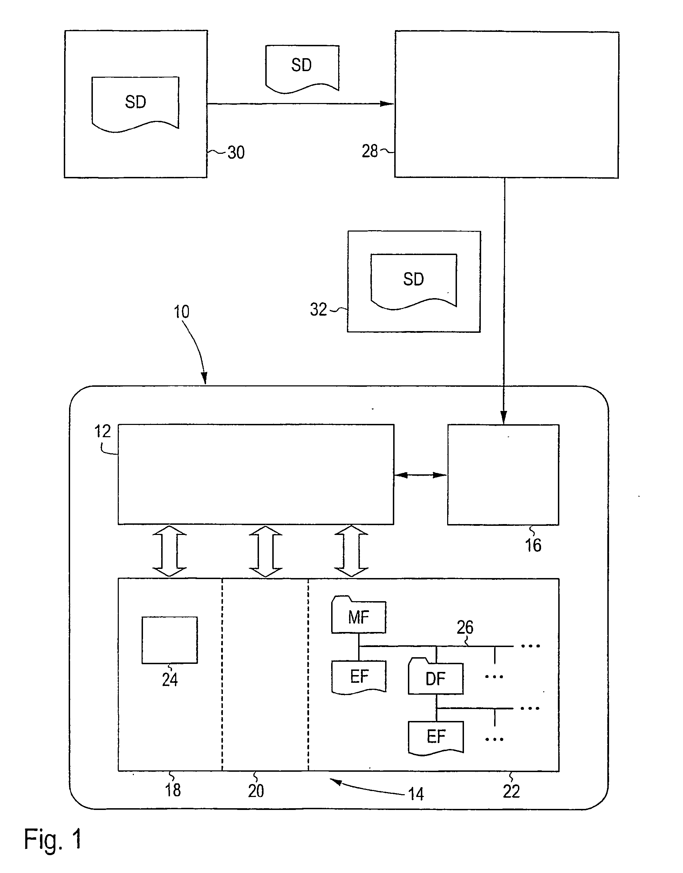

In Fig.1 ist ein tragbarer Datenträger 10 gezeigt, der beispielsweise als Chipkarte oder Chipmodul ausgebildet ist. In an sich bekannter Weise weist der Datenträger 10 einen Halbleiterchip auf, auf dem ein Prozessorkern 12, ein Speicher 14 und eine Schnittstelle 16 zur drahtgebundenen oder drahtlosen Kommunikation ausgebildet sind. Der Speicher 14 weist mehrere in unterschiedlichen Schaltungstechniken ausgebildete Bereiche auf, nämlich im vorliegenden Ausführungsbeispiel einen ROM-Bereich 18 mit maskenprogrammiertem Festwertspeicher, einen RAM-Bereich 20 mit flüchtigem Schreib-/Lese-Speicher und einen Bereich 22 mit nicht-flüchtigem, wiederbeschreibbarem Speicher, z.B. EEPROM, Flash-Speicher usw.

Der IZOM-Bereich 18 des Speichers 14 enthält das Betriebssystem und die von diesem Betriebssystem ausgeführten Programme des Datenträgers 10. Als Teil des Betriebssystems ist insbesondere ein Interpreter 24 vorgesehen, dessen Funktion später noch genauer erläutert werden wird. Ein Dateisystem 26 soll im EEPROM-Bereich 22 angelegt werden. In Fig. 1 ist zur Veranschaulichung ein Ausschnitt des Dateisystems 26 gezeigt, das der Norm ISO 7816 entspricht und eine Wurzel MF (*master file*) sowie mehrere Hierarchieebenen von Verzeichnissen DF (*dedicated file*) und Einzeldateien EF (*elementary file*) aufweist. In Ausführungsvarianten wird das Dateisystem 26 gemäß anderen Konventionen oder Normen angelegt.

Der Datenträger 10 ist an eine Vorrichtung 28 angeschlossen, die zur Initialisierung und/oder Personalisierung des Datenträgers 10 dient. Die Vorrichtung 28 kann beispielsweise als an sich bekanntes Initialisierungssystem oder als Personalisierungssystem oder - in besonders einfachen Ausgestaltungen - als Computer mit einer geeigneten Schnittstelle zur Ankopplung an den Datenträger 10 ausgestaltet sein. Die Vorrichtung 28 liest Spezifikationsdaten SD von einem computerlesbaren Datenträger 30 aus, der z.B. als Diskette oder CD-ROM ausgebildet sein kann. Die Spezifikationsdaten SD werden von der Vorrichtung 28 im vorliegenden Ausführungsbeispiel als Kommando-APDU (*application protocol data unit*) 32 an den Datenträger 10 übertragen.

Die Spezifikationsdaten SD enthalten eine Beschreibung des im Datenträger 10 anzulegenden Dateisystems 26 auf semantischer Ebene. Dies heißt im vorliegenden Ausführungsbeispiel, daß die Spezifikationsdaten SD die Struktur des Dateisystems 26 sowie Dateiattribute und Beziehungen zwischen Dateien in einer abstrakten Form angeben, die von der Struktur der Bitfolgen der im Speicher 14 anzulegenden Verwaltungsdaten unabhängig ist. Die Spezifikationsdaten SD können als eine einzige Datei vorliegen oder auf mehrere Dateien verteilt sein. Beispielsweise kann eine erste Spezifikationsdatei verwendet werden, um Benutzerinformationen anzulegen, eine zweite Spezifikationsdatei, um die Struktur des Dateisystems 26 zu erzeugen, eine Dritte, um Benutzer in Gruppen zusammenzufassen, und so weiter. In Ausgestaltungen, die mehrere Spezifikationsdateien verwenden, werden bevorzugt entsprechend viele Kommando-APDUs 32 an den Datenträger 10 gesendet.

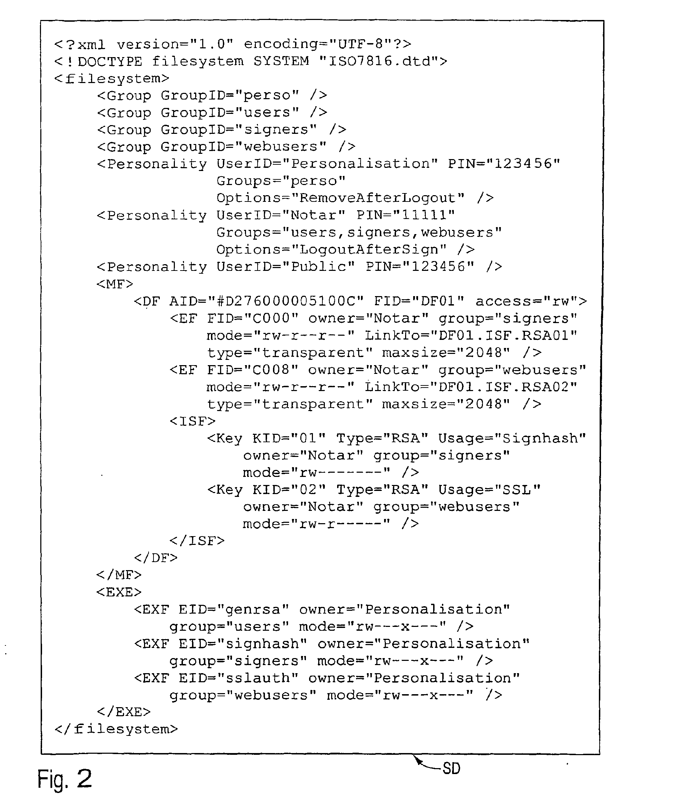

Ein Beispiel für Spezifikationsdaten SD, die in einem portablen und interoperablen XML-Format vorliegen, ist in Fig. 2 dargestellt. Die Dateitypen MF, DF und EF des Dateisystems 26 werden hier durch entsprechende XML-Tags <MF ...>, <DF ...> und <EF ...> repräsentiert, und die Verschachtelung dieser Tags in den Spezifikationsdaten SD gibt die Baumstruktur des zu erzeugenden Dateisystems 26 an. Dateiattribute im Dateisystem 26 werden in den Spezifikationsdaten SD durch entsprechende XML-Attribute dargestellt. So finden sich beispielsweise die grundlegenden Namensattribute FID (*file identifier*) und AID (*application identifier)* als XML-Attribute der Tags <DF ...> und <EF ...> wieder. Weitere XML-Attribute geben die Dateiart (*type*) und die maximale Dateigröße (*maxsize*) an.

In den Spezifikationsdaten SD werden im vorliegenden Ausführungsbeispiel ferner Sicherheitseinstellungen der einzelnen Dateien definiert, z.B. in Fig. 2 durch die XML-Attribute *access, owner, group* und *mode.* Schließlich werden auch Verknüpfungen zwischen Dateien definiert, z.B. in Fig. 2 durch das XML-Attribut *LinkTo.* In den Spezifikationsdaten SD können weitere Angaben zu der anzulegenden Dateistruktur 26 oder zu anderen Initialisierungs-oder Personalisierungswerten für den Datenträger 10 enthalten sein. Einige Beispiele für derartige Angaben sind in Fig. 2 gezeigt.

Zur Initialisierung oder Personalisierung des Datenträgers 10 in dem System von Fig.1 werden zunächst die Spezifikationsdaten SD erstellt. Wenn es sich um ein textuelles Datenformat handelt, kann dazu ein gewöhnlicher Texteditor dienen. Für andere strukturierte Datenformate kann ein geeignetes Werkzeug, beispielsweise ein XML-Generator, eingesetzt werden. Zur Visualisierung kann ein üblicher Web-Browser dienen.

Die erstellten Spezifikationsdaten SD werden auf dem computerlesbaren Datenträger 30 gespeichert und von dort in die Initialisierungs- und/ oder Personalisierungsvorrichtung 28 eingelesen. Im vorliegenden Ausführungsbeispiel führt die Vorrichtung 28 keine inhaltliche Bearbeitung der Spezifikationsdaten SD durch, sondern "verpackt" diese Daten lediglich in einer geeigneten Kommando-APDU 32, die zum tragbaren Datenträger 10 übertragen wird.

Der Prozessorkern 12 des Datenträgers 10 empfängt die Kommando-APDU 32 über die Schnittstelle 16 und extrahiert die darin enthaltenen Spezifikationsdaten SD. Gesteuert vom Interpreter 24 interpretiert der Prozessorkern 12 die Spezifikationsdaten SD und legt das darin beschriebene Dateisystem 26 Stück für Stück im EEPROM-Bereich 22 des Speichers 14 an. Hierbei werden die einzelnen Dateien erzeugt und die Dateiattribute einschließlich der Sicherheitseinstellungen entsprechend den interpretierten Spezifikationsdaten SD gesetzt. Ferner werden Relationen zwischen Dateien definiert und sonstige Einstellungen gemäß den Spezifikationsdaten SD vorgenommen.

Bei der Interpretation durch den Prozessorkern 12 werden im vorliegenden Ausführungsbeispiel unbekannte Elemente der Spezifikationsdaten SD, z.B. unbekannte XML-Tags, einfach ignoriert. Dadurch sind Ergänzungen oder Erweiterungen des Formats der Spezifikationsdaten SD möglich, wobei auch Spezifikationsdaten SD im erweiterten Format von Datenträgern 10, die dieses Format nicht beherrschen, nach wie vor interpretiert werden können. Die strukturelle Identität der bekannten Elemente des Spezifikationsdaten-Formats geht also nicht verloren.

Die Spezifikationsdaten SD können auf dem computerlesbaren Datenträger 30 und/oder bei der Übertragung zum tragbaren Datenträger 10 in verschlüsselter und/ oder signierter Form vorliegen. Die Entschlüsselung bzw. Signaturkontrolle findet dann erst im tragbaren Datenträger 10 statt. Da im vorliegenden Ausführungsbeispiel die Vorrichtung 28 keine inhaltliche Veränderung der Spezifikationsdaten SD vornimmt, braucht hier keine Entschlüsselung zu erfolgen. Für den Initialisierungs- bzw. Personalisierungsvorgang ist somit keine gesicherte Umgebung erforderlich.

## Patentansprüche

1. Verfahren zum Einrichten eines Dateisystems (26) in einem tragbaren Datenträger (10), der einen Prozessorkern (12) und mindestens einen Speicher (14) aufweist, mit den Schritten:
- Einlesen von Spezifikationsdaten (SD), die das Dateisystem (26) zumindest zum Teil auf semantischer Ebene beschreiben, **gekennzeichnet durch**
- das Interpretieren der eingelesenen Spezifikationsdaten (SD) durch den Prozessorkern (12), und
- das Einrichten des Dateisystems (26) gemäß den interpretierten Spezifikationsdaten (SD) in dem mindestens einen Speicher (14) des Datenträgers (10).

2. Verfahren nach Anspruch 1, **dadurch gekennzeichnet, daß** die Spezifikationsdaten (SD) die Dateistruktur des Dateisystems (26) einschließlich Dateiattributen beschreiben.

3. Verfahren nach Anspruch 2, **dadurch gekennzeichnet, daß** die Dateiattribute Sicherheitseinstellungen und/ oder Protokolleinstellungen und/oder Benutzer/Gruppenzuordnungen angeben.

4. Verfahren nach einem der Ansprüche 1 bis 3, **dadurch gekennzeichnet, daß** die Spezifikationsdaten (SD) Relationen zwischen Dateien des Dateisystems angeben.

5. Verfahren nach einem der Ansprüche 1 bis 4, **dadurch gekennzeichnet, daß** die Spezifikationsdaten (SD) in einem textuellen und/oder portablen und/oder interoperablen Format vorliegen.

6. Verfahren nach einem der Ansprüche 1 bis 5, **dadurch gekennzeichnet, daß** die Spezifikationsdaten (SD) in XML und/ oder in einer Codierung gemäß Codierregeln für ASN.1-definierte Datenstrukturen vorliegen.

7. Verfahren nach einem der Ansprüche 1 bis 6, **dadurch gekennzeichnet, daß** die Spezifikationsdaten (SD) kryptographisch gegen Manipulation und/ oder Ausspähung geschützt sind.

8. Tragbarer Datenträger (10), insbesondere Chipkarte oder Chipmodul, mit einem Prozessorkern (12) und mindestens einem Speicher (14), der dazu eingerichtet ist, ein Verfahren nach einem der Ansprüche 1 bis 7 auszuführen.

## Claims

1. A method for installing a file system (26) in a portable data carrier (10) that is provided with a processor core (12) and at least one memory (14), comprising the steps:
- reading in of specification data (SD) that describe the file system (26) at least in part at the semantic level,
**characterized by**
- interpreting the read-in specification data (SD) by the processor core (12), and
- installing the file system (26) in accordance with the interpreted specification data (SD) in the at least one memory (14) of the data carrier (10).

2. A method in accordance with Claim 1, **characterized in that** the specification data (SD) describe the file structure of the file system (26) inclusive of file attributes.

3. A method in accordance with Claim 2, **characterized in that** the file attributes designate security settings and/or protocol settings and/ or user/ group associations.

4. A method in accordance with any one of Claims 1 to 3, **characterized in that** the specification data (SD) designate relations between files of the file system.

5. A method in accordance with any one of Claims 1 to 4, **characterized in that** the specification data (SD) are given in a textual and/ or portable and/ or interoperative format.

6. A method in accordance with any one of Claims 1 to 5, **characterized in that** the specification data (SD) are given in XML and/ or in an encoding in accordance with the encoding rules for ASN.1-defined data structures.

7. A method in accordance with any one of Claims 1 to 6, **characterized in that** the specification data (SD) are cryptographically protected against manipulation and/ or spying.

8. A portable data carrier (10), in particular a smart card or a chip module, comprising a processor core (12) and at least one memory (14), the portable data carrier (10) being adapted for performing a method in accordance with any one of Claims 1 to 7.

## Revendications

1. Procédé de configuration d'un système de fichiers (26) dans un support de données portatif (10) qui comporte un noyau de processeur (12) et au moins une mémoire (14), avec les étapes suivantes :
- lecture de données de spécification (DS) qui décrivent le système de données (26) au moins en partie sur un plan sémantique, **caractérisé par**
- l'interprétation des données de spécification (DS) lues par le noyau de processeur (12), et
- l'établissement du système de fichiers (26) conformément aux données de spécification (DS) interprétées dans la mémoire minimale(14) du support de données (10).

2. Procédé selon la revendication 1, **caractérisé en ce que** les données de spécification (DS) décrivent la structure de fichier du système de fichiers (26), y compris les attributs de fichier.

3. Procédé selon la revendication 2, **caractérisé en ce que** les attributs de fichier indiquent des réglages de sécurité et/ou des réglages de protocole et/ou des utilisateurs/affectations de groupes.

4. Procédé selon l'une quelconque des revendications 1 à 3, **caractérisé en ce que** les données de spécification (DS) indiquent des relations entre des fichiers du système de fichiers.

5. Procédé selon l'une quelconque des revendications 1 à 4, **caractérisé en ce que** les données de spécification (DS) sont sous un format texte et/ou transférable et/ou à interfonctionnement.

6. Procédé selon l'une quelconque des revendications 1 à 5, **caractérisé en ce que** les données de spécifications (DS) sont sous un format XML et/ou dans un codage selon des règles de codage pour des structures de données définies ASN.1.

7. Procédé selon l'une quelconque des revendications 1 à 6, **caractérisé en ce que** les données de spécification (DS) sont protégées par cryptographie contre la manipulation et/ou l'espionnage.

8. Support de données portatif (10), notamment une carte à puce ou un module à puce, comportant un noyau de processeur (12) et au moins une mémoire (14) qui est configurée pour exécuter un procédé selon l'une quelconque des revendications 1 à 7.
